# EUROPEAN PATENT APPLICATION

(11) **EP 4 661 417 A1**
(43) Date of publication of application: **10.12.2025**
(21) Application number: 24749913.0
(22) Date of filing: 15.01.2024
(51) Int. Cl.: H04N 25/771, H04N 25/59, H04N 25/62

(54) **PHOTODETECTION ELEMENT, CONTROL METHOD, AND ELECTRONIC DEVICE**

(30) Priority: 31.01.2023 JP 2023013633
(71) Applicant: Sony Semiconductor Solutions Corporation, Atsugi-shi, Kanagawa 243-0014 (JP)
(72) Inventor: TAKEDA Tohru, Atsugi-shi, Kanagawa 243-0014 (JP)
(74) Representative: Müller Hoffmann & Partner
(86) International application number: PCT/JP2024/000721
(87) International publication number: WO 2024/161959

(57) **Abstract**

The present disclosure provides a photodetection element, a control method, and electronic equipment capable of suppressing an influence of charges overflowing from a lateral overflow integration capacitor.

According to the present disclosure, there is provided a photodetection element including a plurality of pixels, in which each of the pixels includes: a photoelectric conversion element capable of accumulating a charge according to an amount of received light; a first transistor including one end connected to the photoelectric conversion element and the other end connectable to a predetermined discharge potential; and a first storage capacitor connected to the other end.

## Description

### TECHNICAL FIELD

The present disclosure relates to a photodetection element, a control method, and electronic equipment.

### BACKGROUND ART

There has been proposed an image sensor that realizes a wide dynamic range by providing a lateral overflow integration capacitor (LOFIC) that accumulates an electric charge overflowing from a photodiode in a pixel.

### CITATION LIST

### PATENT DOCUMENT

Patent Document 1: Japanese Translation of PCT International Application Publication No. 2021-505080

### SUMMARY OF THE INVENTION

### PROBLEMS TO BE SOLVED BY THE INVENTION

However, in a case where a high-luminance subject such as the sun is imaged, there is a possibility that the pixel value is affected by charges further overflowing from the lateral overflow integration capacitor. Therefore, the present disclosure provides a photodetection element, a control method, and electronic equipment capable of suppressing the influence of charges overflowing from the lateral overflow integration capacitor.

### SOLUTIONS TO PROBLEMS

In order to solve the above problem, according to the present disclosure, there is provided a photodetection element including a plurality of pixels, in which each of the pixels includes:
a photoelectric conversion element capable of accumulating a charge according to an amount of received light;
a first transistor including one end connected to the photoelectric conversion element and the other end connectable to a predetermined discharge potential; and
a first storage capacitor connected to the other end.

The pixel
may further include an AD converter that generates a digital signal based on a charge accumulated in the photoelectric conversion element.

The pixel
may further include:
a second transistor including one end connected to the photoelectric conversion element and the other end connectable to the AD converter; and
a second storage capacitor connected to the other end of the second transistor.

The pixel
may further include
a third transistor including one end connected to the other end of the first transistor and the other end connected to the predetermined discharge potential.

The pixel
may further include
a fourth transistor including one end connected to the other end of the first transistor and the other end connected to the other end of the second transistor.

The pixel
may further include
a fifth transistor including one end connected to the other end of the second transistor and the other end from which a reset potential is supplied.

Both the first transistor and the second transistor may be able to be controlled to a disconnected state, and
in the disconnected state, a potential barrier of the first transistor with respect to the charge may be configured to be lower than a potential barrier of the second transistor with respect to the charge.

Both the first transistor and the third transistor may be able to be controlled to a disconnected state, and
in the disconnected state, a potential barrier of the third transistor with respect to the charge may be configured to be lower than a potential barrier of the first transistor with respect to the charge.

During a reset operation of the pixel, the second transistor may be in a disconnected state, and the first transistor, the third transistor, the fourth transistor, and the fifth transistor may be in a connected state.

During an exposure period of the pixel, the first transistor, the second transistor, the third transistor, the fourth transistor, and the fifth transistor may be in a disconnected state.

At the time of acquiring high-gain first data of the pixel, the first transistor, the second transistor, the third transistor, the fourth transistor, and the fifth transistor may be in a disconnected state.

At the time of charge transfer by the photoelectric conversion element, the second transistor may be in a connected state, and the first transistor, the third transistor, the fourth transistor, and the fifth transistor may be in a disconnected state.

At the time of acquiring high-gain second data of the pixel, the first transistor, the second transistor, the third transistor, the fourth transistor, and the fifth transistor may be brought into a disconnected state after the charge transfer.

At the time of acquiring low-gain third data of the pixel, the fourth transistor may be brought into a connected state, and the first transistor, the second transistor, the third transistor, and the fifth transistor may be brought into a disconnected state after the charge transfer.

At the time of acquiring low-gain fourth data of the pixel, the fourth transistor may be brought into a connected state, and the first transistor, the second transistor, the third transistor, and the fifth transistor may be brought into a disconnected state after the reset operation.

A high-gain image signal may be generated on the basis of the first data and the second data.

A low-gain image signal may be generated on the basis of the third data and the fourth data.

A potential of the predetermined discharge potential and the reset potential may be set to the same potential.

According to the present disclosure, there is provided a control method of a photodetection element including a plurality of pixels,
each of the pixels including:
a photoelectric conversion element capable of accumulating a charge according to an amount of received light;
a first transistor including one end connected to the photoelectric conversion element and the other end connectable to a predetermined discharge potential; and
a first storage capacitor connected to the other end,
the control method including
accumulating a charge overflowing the photoelectric conversion element in the first storage capacitor via the first transistor, and discharging a charge further overflowing the first storage capacitor to the discharge potential.

According to the present disclosure, there is provided electronic equipment including a photodetection element including a plurality of pixels, in which
each of the pixels includes:
a photoelectric conversion element capable of accumulating a charge according to an amount of received light;
a first transistor including one end connected to the photoelectric conversion element and the other end connectable to a predetermined discharge potential; and
a first storage capacitor connected to the other end.

### BRIEF DESCRIPTION OF DRAWINGS

Fig. 1 is a block diagram illustrating a schematic configuration example of a photodetection element to which the present technology is applied.
Fig. 2 is a diagram illustrating a detailed configuration of a pixel array section and a gray code generation/decoding circuit illustrated in Fig. 1.
Fig. 3 is a diagram illustrating a detailed configuration example of an ADC.
Fig. 4 is a diagram illustrating a pixel circuit according to the present embodiment.
Fig. 5 is a planar view illustrating an arrangement example of the pixel circuit according to the embodiment.
Fig. 6 is a diagram illustrating a pixel circuit according to a comparative example.
Fig. 7 is a diagram illustrating a reset state of a pixel circuit.
Fig. 8 is a diagram illustrating a state immediately after resetting.
Fig. 9 is a diagram illustrating a state before overflow.
Fig. 10 is a diagram illustrating a state at the start of overflow.
Fig. 11 illustrates a state in which exposure is further continued.
Fig. 12 is a diagram illustrating a state in which the exposure is further continued and a LOFIC is saturated.
Fig. 13 is a diagram illustrating a reset state of an FD.
Fig. 14 is a diagram illustrating an acquisition state of a P1 phase of the FD.
Fig. 15 is a diagram illustrating a state during acquisition of the P1 phase of the FD.
Fig. 16 is a diagram schematically illustrating a state of a circuit diagram of a pixel circuit according to a comparative example corresponding to Fig. 15(a).
Fig. 17 is a diagram illustrating an example in which an output signal of a comparison circuit is erroneously inverted by high-luminance imaging.
Fig. 18 is a diagram schematically illustrating a state of a circuit diagram of a pixel circuit according to the present embodiment corresponding to Fig. 15(b).
Fig. 19 is a diagram illustrating a captured image of the pixel circuit according to the present embodiment in high-luminance imaging.
Fig. 20 is a diagram illustrating a charge transfer state in a photodiode.
Fig. 21 is a diagram illustrating a state during acquisition of a high-gain D1 phase.
Fig. 22 is a diagram illustrating a state during acquisition of a low-gain D2 phase.
Fig. 23 is a diagram illustrating a state during acquisition of a low-gain P2 phase.
Fig. 24 is a block diagram illustrating an example of a schematic configuration of a vehicle control system.
Fig. 25 is an explanatory diagram illustrating an example of installation positions of an outside-vehicle information detecting section and an imaging section.

### MODE FOR CARRYING OUT THE INVENTION

Hereinafter, embodiments of a photodetection element, a control method, and electronic equipment will be described with reference to the drawings. Although principal configuration parts of the photodetection element, the control method, and the electronic equipment will be mainly described below, the photodetection element, the control method, and the electronic equipment may include configuration parts and functions that are not illustrated or described. The following description is not intended to exclude configuration parts and functions that are not illustrated or described.

### (First embodiment)

### <1. Overall schematic configuration example of photodetection element>

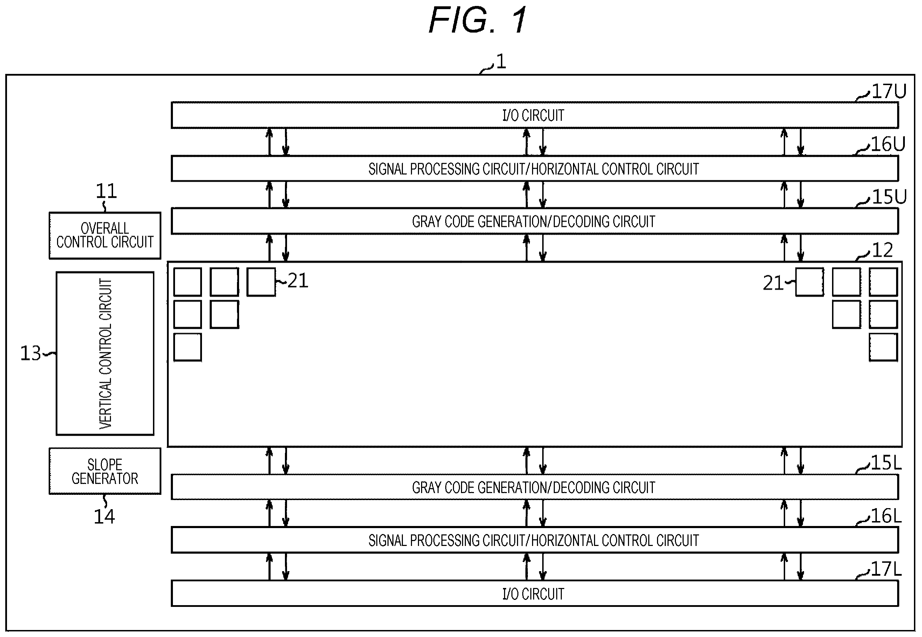

Fig. 1 illustrates a schematic configuration of a photodetection element to which the present technology is applied.

A photodetection element 1 of Fig. 1 includes an overall control circuit 11, a pixel array section 12, a vertical control circuit 13, and a slope generator 14. Furthermore, the photodetection element 1 includes a gray code generation/decoding circuit 15, a signal processing circuit/horizontal control circuit 16, and an I/O circuit 17 on each of the upper side and the lower side of the pixel array section 12. That is, the gray code generation/decoding circuit 15U, the signal processing circuit/horizontal control circuit 16U, and the I/O circuit 17U are disposed on an upper side of the pixel array section 12, and the gray code generation/decoding circuit 15L, the signal processing circuit/horizontal control circuit 16L, and the I/O circuit 17L are disposed on a lower side of the pixel array section 12.

The overall control circuit 11 includes a timing generator or the like that generates various timing signals, and controls an entire operation of the photodetection element 1 by, for example, supplying the generated various timing signals to each section, and the like. The pixel array section 12 is a region in which the pixels 21 are arranged in a matrix. Each pixel 21 in the pixel array section 12 generates an analog pixel signal SIG according to the amount of received light, converts the analog pixel signal SIG into a digital signal (AD conversion) in the pixel array section 12, and outputs the digital signal to the gray code generation/decoding circuit 15.

The vertical control circuit 13 outputs a control signal for controlling exposure of each pixel 21 in the pixel array section 12. Furthermore, the vertical control circuit 13 performs control to output the digital pixel signal SIG of each pixel 21 generated in the pixel array section 12 to the gray code generation/decoding circuit 15 outside the pixel array section 12 in a predetermined order.

The slope generator 14 generates and outputs a reference signal (reference voltage signal) REF that is a slope signal whose voltage level monotonously decreases or monotonously increases with time, which is necessary for AD conversion of the analog pixel signal SIG generated in the pixel.

The gray code generation/decoding circuit 15 generates and outputs a gray code for generating AD conversion data, and converts the input gray code into binary data. The signal processing circuit/horizontal control circuit 16 performs predetermined digital signal processing as necessary such as correlated double sampling (CDS) processing, black level correction processing for correcting black level, and color processing, for example, and thereafter, outputs a result thereof to the I/O circuit 17. The signal processing circuit/horizontal control circuit 16 includes a memory (for example, the RAM 401 of Fig. 38) such as a dynamic random access memory (DRAM) or a static RAM (SRAM) that temporarily stores data for predetermined signal processing and horizontal transfer control.

The I/O circuit 17 outputs the pixel signal after predetermined signal processing supplied from the signal processing circuit/horizontal control circuit 16 to the outside of the device. Furthermore, the I/O circuit 17 receives an input of a control signal, a power supply, and the like supplied from an external device, and supplies the control signal, the power supply, and the like into the device.

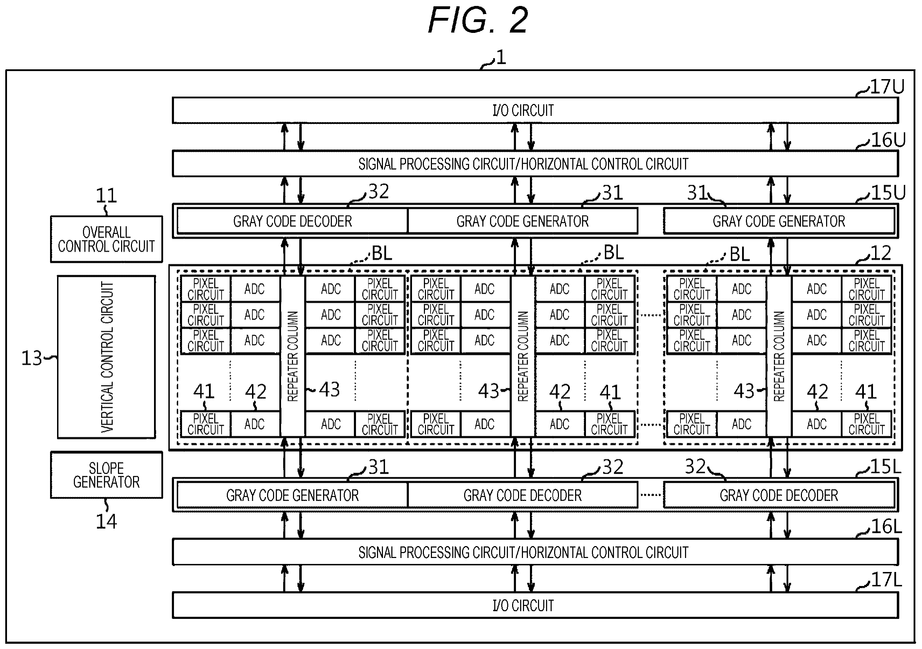

Fig. 2 illustrates a detailed configuration of the pixel array section 12 and the gray code generation/decoding circuit 15 illustrated in Fig. 1.

In the gray code generation/decoding circuit 15, a gray code generator 31 and a gray code decoder 32 are alternately disposed in the horizontal direction (the horizontal direction in Fig. 2). The gray code generator 31 and the gray code decoder 32 are disposed corresponding to the blocks BL obtained by horizontally dividing the pixel array section 12.

The gray code generation/decoding circuit 15L on the lower side of the pixel array section 12 is alternately disposed in the order of the gray code generator 31 and the gray code decoder 32 from the left end, whereas the gray code generation/decoding circuit 15U on the upper side of the pixel array section 12 is alternately disposed in the order of the gray code decoder 32 and the gray code generator 31 from the left end.

In other words, the gray code generator 31 and the gray code decoder 32 of the gray code generation/decoding circuit 15L and the gray code generator 31 and the gray code decoder 32 of the gray code generation/decoding circuit 15U are alternately disposed so as not to overlap with the corresponding block BL of the pixel array section 12.

The gray code generator 31 generates a gray code for generating AD conversion data and outputs the gray code to the repeater column 43 of the pixel array section 12. The gray code decoder 32 converts gray codes (gray code latch values to be described later) input from the repeater column 43 into binary data. In the present embodiment, it is assumed that the gray code generator 31 generates N-bit (N > 0) gray codes. In a case where an N-bit (N > 0) gray code is used, the bit depth of the pixel signal output from the photodetection element 1 is (N - 1) bits for CDS processing described later.

In the pixel array section 12, a plurality of pixel circuits 41, a plurality of AD converters (ADCs) 42, and a plurality of repeater columns 43 are disposed. Each pixel 21 in the pixel array section 12 includes a pixel circuit 41 and an ADC 42. The repeater column 43 is provided in units of blocks BL divided in the horizontal direction.

The pixel circuit 41 outputs a charge signal corresponding to the amount of received light to the ADC 42 as the analog pixel signal SIG. The ADC 42 converts the analog pixel signal SIG supplied from the pixel circuit 41 into a digital signal. The ADC 42 latches and stores a value corresponding to the amount of received light of the pixel 21 (pixel circuit 41) among the gray codes supplied from the gray code generator 31 via the repeater column 43. The latch-stored value of the gray code corresponds to the digital value of the pixel signal SIG.

The repeater column 43 transfers the gray code output from the gray code generator 31 in the vertical direction and supplies the gray code to each ADC 42 in the block BL. Furthermore, the repeater column 43 transfers the latch-stored value (Hereinafter, the gray code latch value is referred to as a gray code latch value.) of the gray code output from each ADC 42 in the block BL in the vertical direction, and supplies the value to the gray code decoder 32.

The gray code decoder 32 generates a clock signal CLK used to transfer the gray code and the gray code latch value of the repeater column 43, and outputs the clock signal CLK to the repeater column 43. In the repeater column 43, the clock signal CLK is transferred from the gray code decoder 32 toward the gray code generator 31, whereas the gray code and the gray code latch value are transferred from the gray code generator 31 toward the gray code decoder 32.

Furthermore, as described above, since the gray code generator 31 and the gray code decoder 32 are alternately disposed in the horizontal direction corresponding to the blocks BL in the pixel array section 12, in a case where the repeater column 43 of a certain block BL in the pixel array section 12 vertically transfers the gray code and the gray code latch value from top to bottom in Fig. 2, the repeater column 43 of the adjacent block BL vertically transfers the gray code and the gray code latch value from bottom to top.

Similarly, in a case where the repeater column 43 of a certain block BL in the pixel array section 12 vertically transfers the clock signal CLK output from the gray code decoder 32 from bottom to top, the repeater column 43 of the adjacent block BL vertically transfers the clock signal CLK output from the gray code decoder 32 from top to bottom.

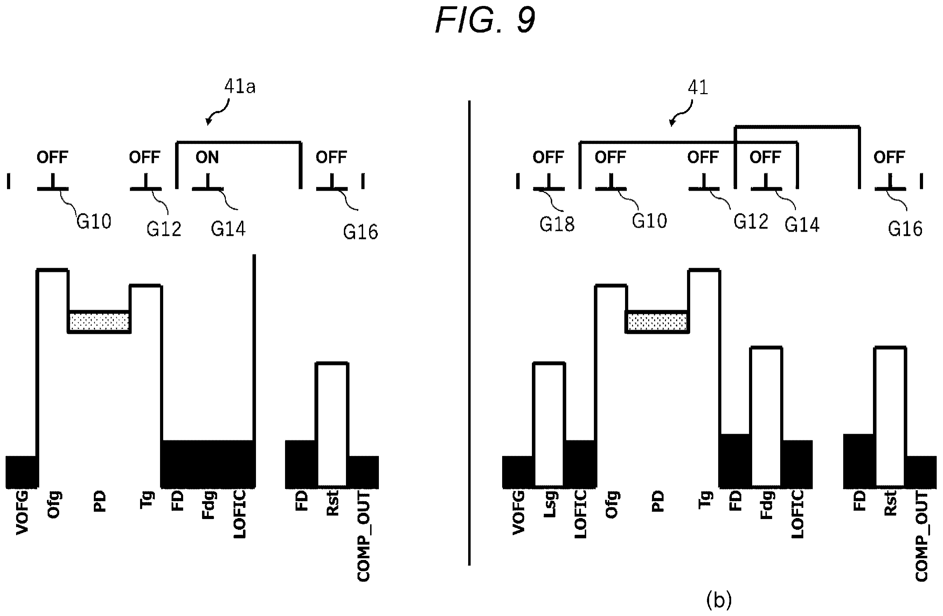

Note that the pixel circuit 41 and the ADC 42 illustrated in Fig. 2 are disposed side by side for convenience of description, but actually, as will be described later with reference to Fig. 9, the pixel circuit 41 is disposed so as to overlap the ADC 42 and the repeater column 43.

### <2. Detailed configuration example of pixel>

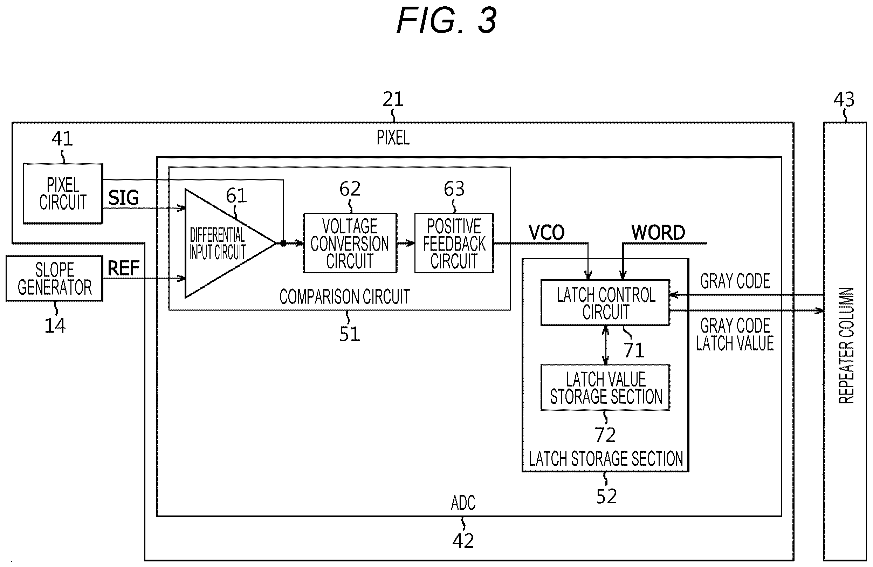

A detailed configuration of the ADC 42 that is a part of the pixel 21 will be described with reference to Fig. 3. Fig. 3 is a diagram illustrating a detailed configuration example of the ADC 42. The ADC 42 includes a comparison circuit 51 and a latch storage section 52.

The comparison circuit 51 compares the reference signal REF supplied from the slope generator 14 with the pixel signal SIG supplied from the pixel circuit 41, and outputs an output signal VCO as a comparison result signal representing a comparison result. When the reference signal REF and the pixel signal SIG are the same (the same voltage), the comparison circuit 51 inverts the output signal VCO. The comparison circuit 51 includes a differential input circuit 61, a voltage conversion circuit 62, and a positive feedback (PFB) circuit 63.

The latch storage section 52 includes a latch control circuit 71 that controls write operation and read operation of the gray code, and a latch value storage section 72 that stores a value of the gray code corresponding to the amount of light received by the pixel 21 (pixel circuit 41), that is, a gray code latch value.

In addition to the input of the output signal VCO from the comparison circuit 51, a WORD signal for controlling the read timing of the pixel 21 during the pixel signal read operation is supplied from the vertical control circuit 13 to the latch storage section 52. Furthermore, the gray code generated by the gray code generator 31 is also supplied to the latch storage section 52 via the repeater column 43.

In the write operation of the gray code, the latch control circuit 71 stores the gray code, which is supplied from the repeater column 43 and updated every unit time, in the latch value storage section 72 while a Hi (High) output signal VCO is input from the comparison circuit 51. Then, when the reference signal REF and the pixel signal SIG become the same (voltage) and the output signal VCO supplied from the comparison circuit 51 is inverted to Lo (Low), the latch control circuit 71 stops writing (updating) the supplied gray code to the latch value storage section 72, and causes the gray code finally stored in the latch value storage section 72 to be held as a gray code latch value.

After the sweep of the reference signal REF is completed, and the gray code latch values are stored in the latch value storage sections 72 of all the pixels 21 in the pixel array section 12, the operation of the pixels 21 is changed from the write operation to a read operation. In the read operation of the gray code, on the basis of the WORD signal for controlling the read timing, the latch control circuit 71 outputs the gray code latch value (digital pixel signal SIG) stored in the latch value storage section 72 to the repeater column 43 when the pixel 21 reaches its own read timing. The repeater column 43 sequentially transfers the supplied gray code latch values in the vertical direction (column direction) and supplies the gray code latch values to the gray code decoder 32.

### <Configuration example of pixel circuit>

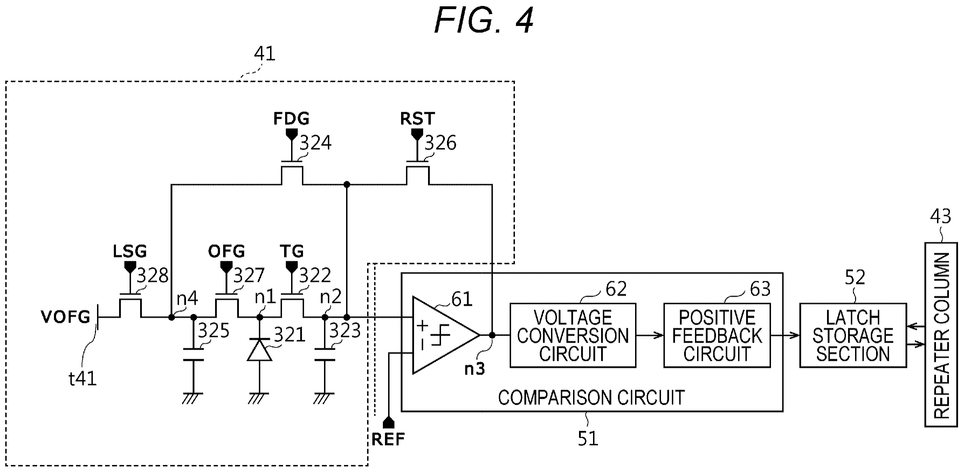

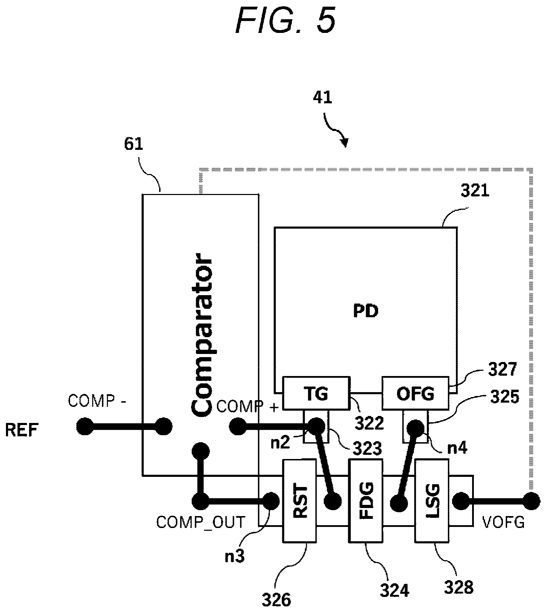

A configuration example of the pixel circuit 41 according to the present embodiment will be described with reference to Figs. 4 and 5.

Fig. 4 is a diagram illustrating the pixel circuit 41 according to the present embodiment together with the comparison circuit 51, the latch storage section 52, and the repeater column 43 illustrated in Fig. 3. Fig. 5 is a planar view illustrating an arrangement example of the pixel circuit 41.

As illustrated in Figs. 4 and 5, the pixel circuit 41 according to the present embodiment includes a photodiode (PD) 321 as a photoelectric conversion element, a first transfer transistor 322, a floating diffusion layer (FD) 323, a second transfer transistor 324, a lateral overflow integration capacitor 325 (Hereinafter, it is referred to as LOFIC 325.), a reset transistor 326, a third transfer transistor 327, and a discharge transistor 328. Moreover, in Figs. 4 and 5, connection points n1 to n4 and a terminal t41 are illustrated.

The cathode of the photodiode 321 is connected to the connection point n1, and the anode is connected to the ground (predetermined low potential). The photodiode 321 accumulates electric charge corresponding to the amount of received light by photoelectric conversion.

The first transfer transistor 322 has one end connected to the connection point n1 and the other end connected to the non-inverting terminal (+) of the comparison circuit 61 via the connection point n2. The first transfer transistor 322 is in a conductive state when the gate signal TG under the control of the overall control circuit 11 is at a high level (ON), for example, and is in a non-conductive state when the gate signal TG is at a low bell (OFF). Note that the reference signal REF is input to the inverting terminal (-) of the comparison circuit 61.

One end of the floating diffusion layer (FD) 323 is connected to the connection point n2, and the other end is connected to the ground. Note that the floating diffusion layer (FD) 323 is simply illustrated by a symbol of a capacitor.

The second transfer transistor 324 has one end connected to the connection point n4 and the other end connected to the non-inverting terminal (+) of the comparison circuit 61 via the connection point n2. The second transfer transistor 324 is in a conductive state when the gate signal FDG under the control of the overall control circuit 11 is at a high level (ON), for example, and is in a non-conductive state when the gate signal FDG is at a low bell (OFF).

The LOFIC 325 has one end connected to the connection point n4 and the other end connected to the ground. One end of the reset transistor 326 is connected to the connection point n3, and the other end is connected to the non-inverting terminal (+) of the comparison circuit 61 via the connection point n2. The reset transistor 326 is in a conductive state when the gate signal RST according to the control of the overall control circuit 11 is, for example, at a high level (ON), and is in a non-conductive state when the gate signal RST is at a low bell (OFF).

The third transfer transistor 327 has one end connected to the connection point n1 and the other end connected to the connection point n4. The third transfer transistor 327 is in a conductive state when the gate signal OFG according to the control of the overall control circuit 11 is at a high level (ON), for example, and is in a non-conductive state when the gate signal OFG is at a low bell (OFF).

The discharge transistor 328 has one end connected to the connection point n4 and the other end connected to the terminal t41. For example, a voltage VOFG of a constant voltage source is applied to the terminal t41. The discharge transistor 328 is in a conductive state when the gate signal LSG according to the control of the overall control circuit 11 is at a high level (ON), for example, and is in a non-conductive state when the gate signal LSG is at a low bell (OFF).

### <Configuration example of pixel circuit in comparative example>

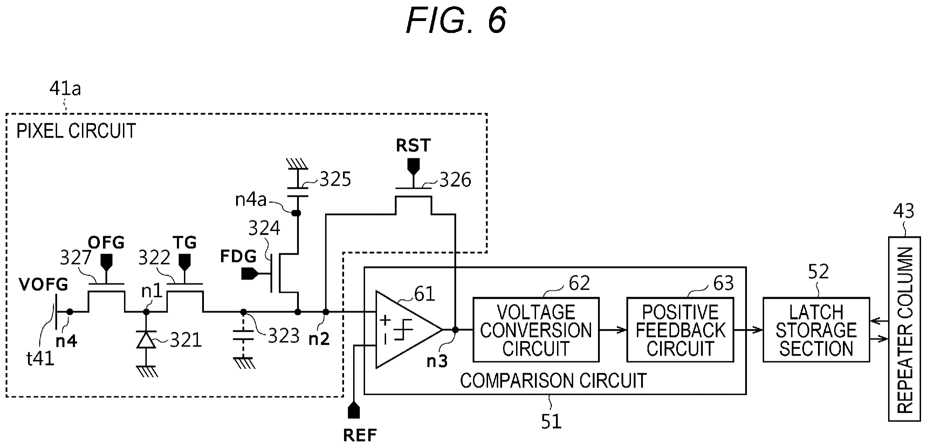

Fig. 6 is a diagram illustrating a pixel circuit 41a according to a comparative example together with the comparison circuit 51, the latch storage section 52, and the repeater column 43 illustrated in Fig. 3. The pixel circuit 41a is different from the pixel circuit 41 according to the present embodiment in that the discharge transistor 328 is not provided, the connection node n4, and the connection node n4a are not connected. That is, the pixel circuit 41a according to the comparative example is different in that the connection node n4 is directly connected to the terminal t41 of the constant voltage source without passing through the discharge transistor 328. As described above, the pixel circuit 41a according to the comparative example includes the photodiode (PD) 321 as a photoelectric conversion element, the first transfer transistor 322, the FD 323, the second transfer transistor 324, the LOFIC 325, the reset transistor 326, and the third transfer transistor 327.

### (Operation of pixel circuit)

Hereinafter, with reference to Figs. 4 and 6, an operation example will be described by comparing the operation of the pixel circuit 41a according to the comparative example with the operation of the pixel circuit 41 according to the present embodiment. The pixel circuit 41a and the pixel circuit 41 can output two types of pixel signals of a high-gain pixel signal and a low-gain pixel signal. In the high gain, data of the P1 phase and the D1 phase is acquired and converted into an image signal. On the other hand, in the low gain, data of the P2 phase and the D2 phase is acquired and converted into an image signal. Note that the data of the P1 phase according to the present embodiment corresponds to the first data, the data of the D1 phase corresponds to the second data, the data of the D2 phase corresponds to the third data, and the data of the P2 phase corresponds to the fourth data.

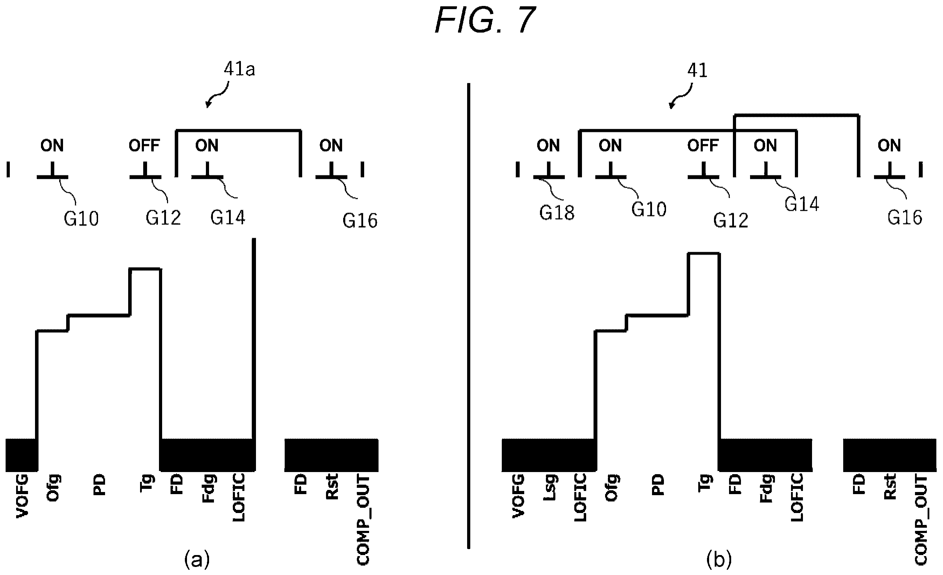

Furthermore, in Figs. 7 to 15 and Figs. 20 to 22, (a) illustrates a potential state of the pixel circuit 41a according to the comparative example, and (b) illustrates a potential state of the pixel circuit 41 according to the present embodiment. Furthermore, VOFG on the horizontal axis indicates the potential of the potential VOFG of the terminal t41, Ofg indicates the potential of the third transfer transistor 327, PD indicates the potential of the photodiode 321, Tg indicates the potential of the first transfer transistor 322, FD indicates the potential of the FD 323, Fdg indicates the potential of the second transfer transistor 324, LOFIC indicates the potential of the LOFIC 325, Rst indicates the potential of the reset transistor 326, COMPT_OUT indicates the potential of the output terminal of the comparison circuit 61, and Lsg indicates the potential of the discharge transistor 328. Note that the potential of the output terminal of the comparison circuit 61 at the time of the reset operation and the potential VOFG of the terminal t41 are controlled to the same potential.

Furthermore, gates G10, G12, G14, and G16 in (a) of the drawing respectively correspond to the gates of the third transfer transistor 327, the first transfer transistor 322, and the second transfer transistor 324. In this case, ON indicates a high level of the gate signal and indicates a conduction state. Furthermore, OFF indicates that the gate signal is at a low level and is in a non-conductive state. Note that the gate signal may be turned off at a high level, and the gate signal may be turned on at a low level.

In this manner, VOFG indicates the potential of the potential VOFG of the terminal t41.

The gate G10 corresponds to Ofg. Furthermore, Ofg indicates a potential of the third transfer transistor 327.

Similarly, the gate G12 corresponds to Tg, and Tg indicates the potential of the first transfer transistor 322.

The FD indicates a potential of the FD 323.

Similarly, the gate G14 corresponds to Fdg, and Fdg indicates the potential of the second transfer transistor 324.

LOFIC indicates the potential of the LOFIC 325.

Similarly, the gate G16 corresponds to Rst, and Rst indicates the potential of the reset transistor 326.

COMPT_OUT indicates the potential of the output terminal of the comparison circuit 61.

Similarly, the gate G18 corresponds to the Lsg, and the Lsg indicates the potential of the discharge transistor 328. Note that, for convenience of description, the same symbol corresponds to the same circuit element, for example, FD and LOFIC.

Similarly, gates G18, G10, G12, G14, and G16 in (b) of the drawing correspond to the respective gates of the discharge transistor 328, the third transfer transistor 327, the first transfer transistor 322, the second transfer transistor 324, and the reset transistor 326. In this case, ON indicates a high level of the gate signal and indicates a conduction state. Furthermore, OFF indicates that the gate signal is at a low level and is in a non-conductive state.

### (Reset state)

Fig. 7 is a diagram illustrating a reset state. (a) In the pixel circuit 41a according to the comparative example in the drawing, the gate G10 is turned on, and the charge of the photodiode 321 is discharged to the terminal t41. Since the gate G12 is OFF, the potential barrier of the first transfer transistor 322 is maintained, and the charge of the photodiode 321 is not discharged to the FD 323.

The gate G14 is turned on, the second transfer transistor 324 is brought into conduction, the gate G16 is turned on, and the reset transistor 326 is brought into conduction. Therefore, the nodes n3, n2, and n4a have the same potential as the potential of the output terminal of the comparison circuit 61. As can be seen, one ends of the LOFIC 325 and the FD 323 have the same potential as the potential of the output terminal of the comparison circuit 61, and the accumulated charges of the LOFIC 325 and the FD 323 are reset.

On the other hand, (b) the pixel circuit 41 according to the present embodiment in the drawing is different from the comparative example in that the gates G18 and G10 are turned on, and the charge of the photodiode 321 is discharged to the terminal t41 via the discharge transistor 328. In other words, similarly to the diagram (a), since the gate G12 is OFF, the potential barrier of the first transfer transistor 322 is maintained, and the charge of the photodiode 321 is not discharged to the FD 323. The gates G14 and G16 are turned on, and the accumulated charges in the LOFIC 325 and the FD 323 are reset similarly to the comparative example.

Note that, in a case where the potential of the output terminal of the comparison circuit 61 at the time of the reset operation is different from the potential VOFG of the terminal t41, reset timings of the photodiode 321 and the FD 323 may be divided. For example, at the reset timing of the photodiode 32, the gates G18 and G10 are turned on, and the gate G16 is turned off (the gate G16 may be turned off). At the reset timing of the FD 323, the gate G18 is turned off, and then the gates G16 and G14 are turned on (the gate G10 may be in any state).

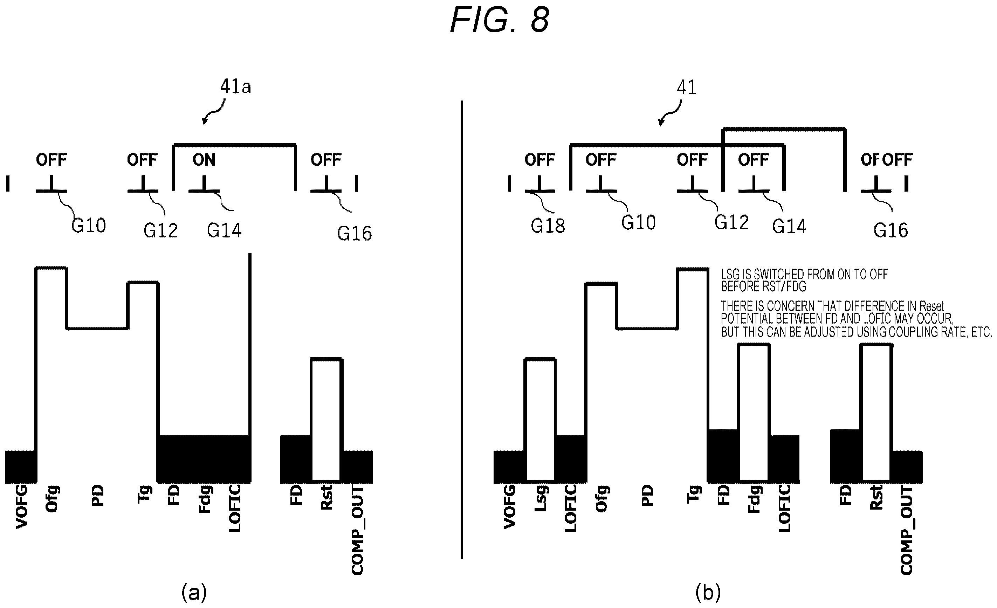

Figs. 8 to 12 illustrate operation examples during the exposure period.

### (Immediately after resetting)

Fig. 8 is a diagram illustrating a state immediately after resetting. (a) In the pixel circuit 41a according to the comparative example in the drawing, the gates G10 and G16 are switched from ON to OFF. Therefore, the third transfer transistor 327 and the reset transistor 326 are brought into a non-conductive state, a potential barrier is formed by the third transfer transistor 327, and charge accumulation in the photodiode 321 is started. At this time, the potential barrier is formed such that the first transfer transistor 322 is lower than the third transfer transistor 327.

On the other hand, since the gate G14 maintains ON, the FD 323 and the LOFIC 325 maintain a parallel connection state.

On the other hand, in the pixel circuit 41 according to the present embodiment illustrated in (b) of the drawing, all of the gates G18, G10, G12, G14, and G16 are turned off. Similarly to the pixel circuit 41a according to the comparative example, the third transfer transistor 327 and the reset transistor 326 are brought into a non-conductive state, a potential barrier is formed by the third transfer transistor 327, and charge accumulation in the photodiode 321 is started. At this time, the potential barrier is different from that of the comparative example in that the first transfer transistor 322 is formed to be higher than the third transfer transistor 327.

On the other hand, since the gate G14 is turned off, the second transfer transistor 324 is in a non-conductive state, and a potential barrier is formed between the FD 323 and the LOFIC 325, which is different from the comparative example.

At this time, since the gate G18 is also OFF, the discharge transistor 328 is in a non-conductive state. As described above, in the comparative example, the FD 323 and the LOFIC 325 are connected in parallel, whereas in the pixel circuit 41 according to the present embodiment, the FD 323 and the LOFIC 325 are not connected.

### (State before overflow)

Fig. 9 is a diagram illustrating a state before overflow. In Fig. 9, the gate signal is equivalent to that in Fig. 8. Therefore, charges are accumulated in the photodiode 321 in both the pixel circuit 41a according to the comparative example and the pixel circuit 41 according to the present embodiment.

### (State at start of overflow)

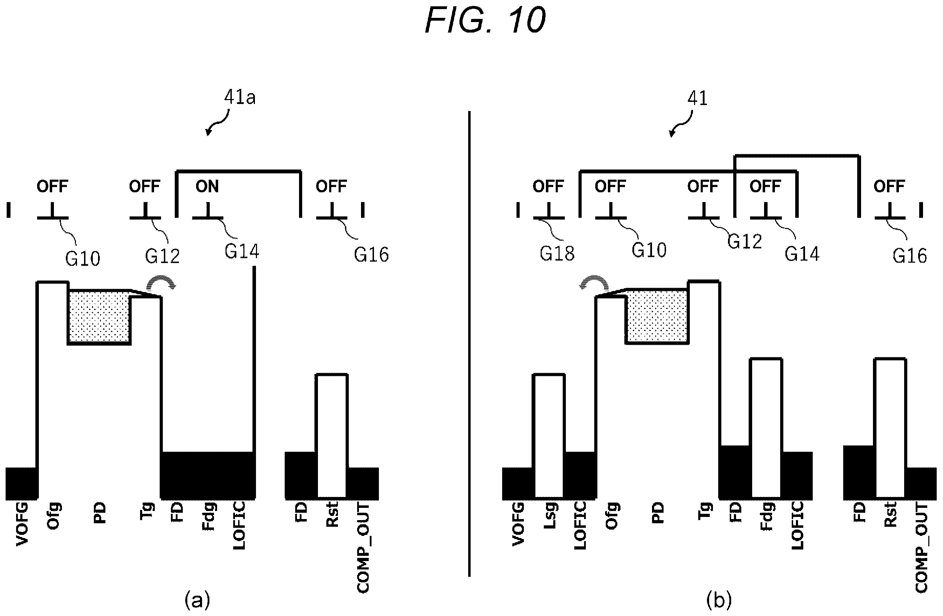

Fig. 10 is a diagram illustrating a state at the start of overflow. In Fig. 10, the gate signals are in the same state as those in Figs. 8 and 9. Therefore, charges are accumulated in the photodiode 321 in both the pixel circuit 41a according to the comparative example and the pixel circuit 41 according to the present embodiment.

In the pixel circuit 41a, since the potential barrier is formed such that the first transfer transistor 322 is lower than the third transfer transistor 327, the charges overflowing from the photodiode 321 start to be accumulated in the FD 323 and the LOFIC 325.

On the other hand, in the pixel circuit 41 according to the present embodiment, since the potential barrier is formed such that the first transfer transistor 322 is higher than the third transfer transistor 327, the charges overflowing from the photodiode 321 start to be accumulated in the LOFIC 325. At this time, the FD 323 and the LOFIC 325 are in a disconnected state, and thus are different in that the charges overflowing from the photodiode 321 are not accumulated in the FD 323.

### (State in which exposure is further continued)

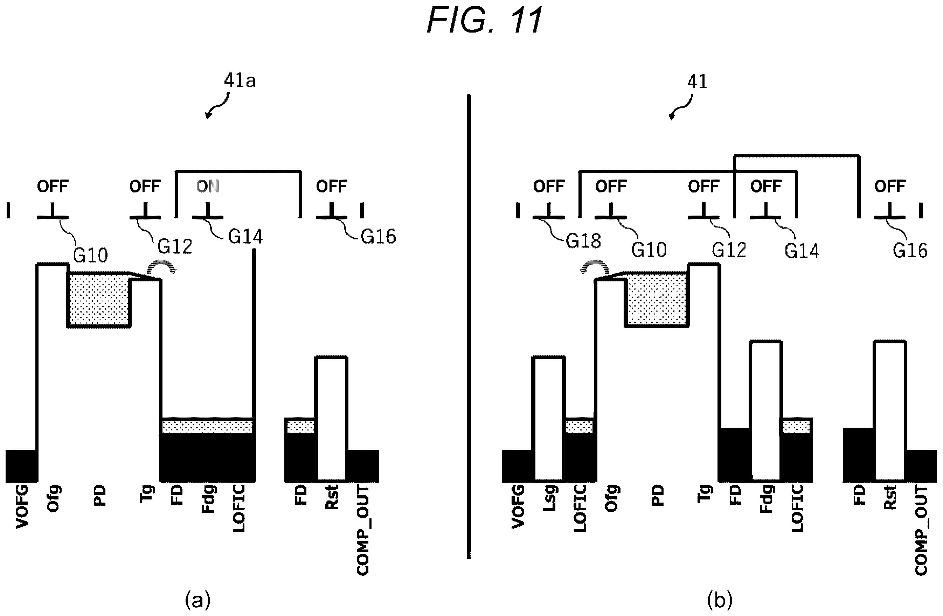

Fig. 11 is a diagram illustrating a state in which the exposure is further continued. In Fig. 11, the gate signal is equivalent to that in Figs. 8 to 10. Therefore, the charge of the photodiode 321 further overflows in both the pixel circuit 41a according to the comparative example and the pixel circuit 41 according to the present embodiment.

In the pixel circuit 41a, the charges overflowing from the photodiode 321 are accumulated in both the FD 323 and the LOFIC 325.

On the other hand, in the pixel circuit 41 according to the present embodiment, since the FD 323 and the LOFIC 325 are in a non-connection state, the charges overflowing from the photodiode 321 are not accumulated in the FD 323.

### (State in which exposure further is continued and LOFIC is saturated.)

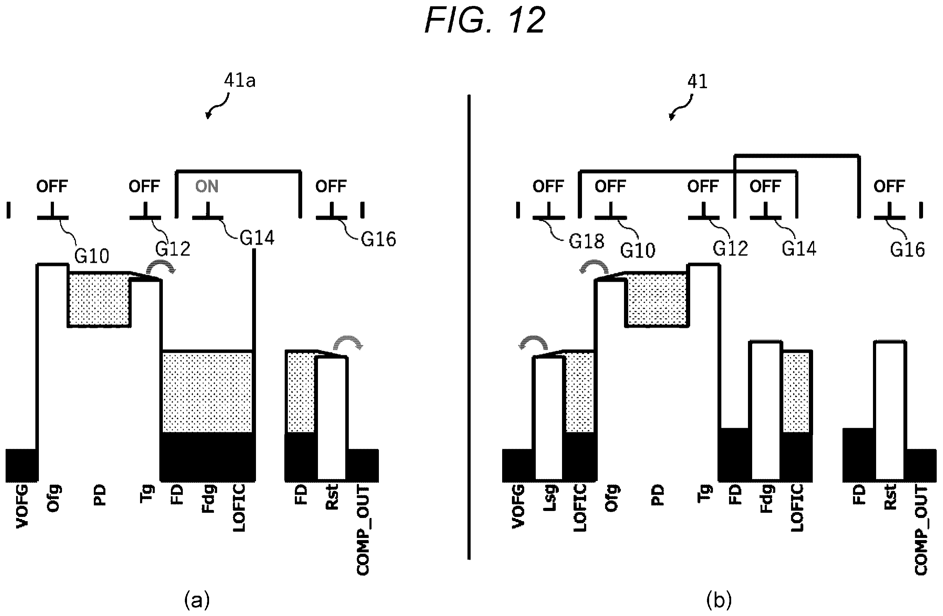

Fig. 12 is a diagram illustrating a state in which the exposure is further continued and the LOFIC 325 is saturated. In Fig. 12, the gate signal is equivalent to that in Figs. 8 to 11. Therefore, the charge of the photodiode 321 further overflows in both the pixel circuit 41a according to the comparative example and the pixel circuit 41 according to the present embodiment.

As illustrated in Fig. 12(a), in the pixel circuit 41a, the charges overflowing from the FD 323 and the LOFIC 325 exceed the potential barrier of the set transistor 326, and the charges flow to the output terminal side of the comparison circuit 61.

On the other hand, in the pixel circuit 41 according to the present embodiment, as illustrated in Fig. 4, unlike the comparative example, one end of the LOFIC 325 is connected to the node n4. Therefore, the LOFIC 325 is connected to the terminal t41 via the discharge transistor 328. At this time, as illustrated in Fig. 12(b), the potential barrier of the discharge transistor 328 is configured to be lower than the potential barrier of the third transfer transistor 327. Therefore, when the LOFIC 325 is saturated, the charge is discharged to the terminal t41.

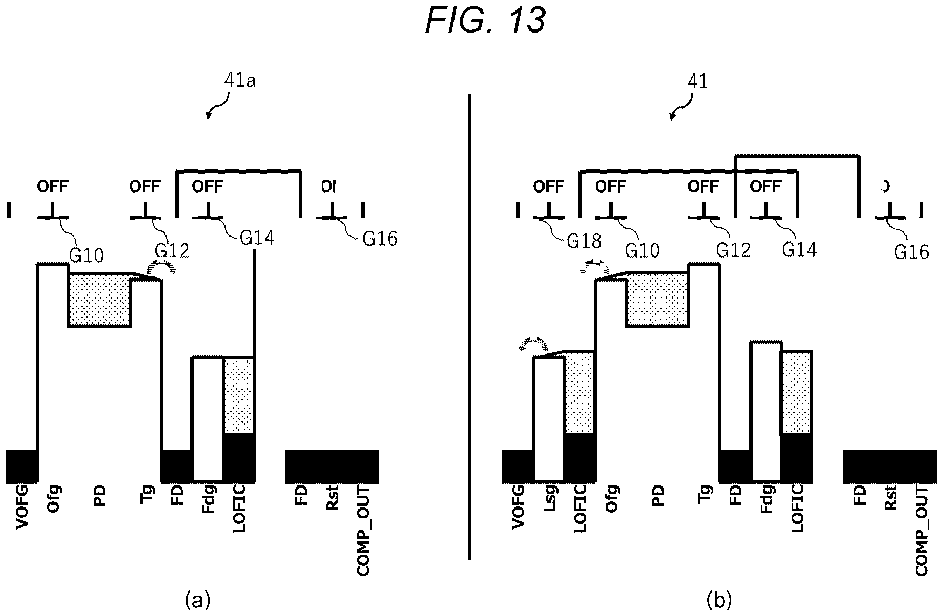

An operation of acquiring the P1 phase (for high gain) will be described with reference to Figs. 13 to 15.

### (Reset of FD)

Fig. 13 is a diagram illustrating a reset state of the FD. As illustrated in Fig. 13(a), the gate G14 is turned off, and the gate G16 is turned on. Therefore, the FD 323 and the LOFIC 325 are disconnected. Furthermore, the reset transistor 326 is brought into a conductive state, and the electric charge in the FD 323 becomes the output terminal voltage of the comparison circuit 61, and is reset.

On the other hand, in the pixel circuit 41 according to the present embodiment, as illustrated in Fig. 13(b), the gate G14 maintains OFF, and the FD 323 is in a state where no charge is accumulated even during exposure. The gate G16 is turned on, and the set transistor 326 is in a conductive state. Therefore, the charge in the FD 323 becomes the output terminal voltage of the comparison circuit 61, and is reset.

As described above, in the pixel circuit 41a according to the comparative example, the signal charges accumulated in the FD 323 at the time of resetting the FD 323 are discarded. Therefore, variations occur due to inter-pixel differences such as the capacitance of the FD 323 and the charge injection amount when the second transfer transistor 324 is turned off.

On the other hand, in the pixel circuit 41 according to the present embodiment, since the signal charges are directly accumulated in the LOFIC, it is not necessary to discard the charges at the time of resetting the FD 323. Furthermore, since the second transfer transistor 324 maintains OFF, variations due to inter-pixel differences such as the charge injection amount are also suppressed.

### (At start of acquisition of P1 phase)

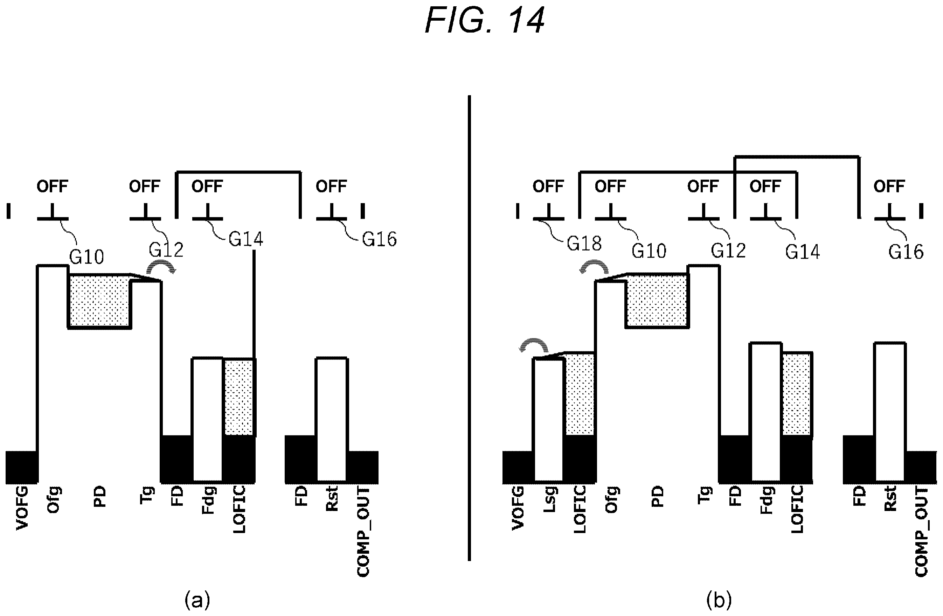

Fig. 14 is a diagram illustrating an acquisition state of the P1 phase of the FD. As illustrated in Fig. 14(a), comparison (sweep of the reference signal REF) between the reference signal REF (see Fig. 3) and the pixel signal SIG (see Fig. 3) is started. At this point, because the reference signal REF is larger than the pixel signal SIG, the output signal is Hi.

Similarly, as illustrated in Fig. 14(b), comparison (sweep of the reference signal REF) between the reference signal REF (see Fig. 3) and the pixel signal SIG (see Fig. 3) is started. At this point, because the reference signal REF is larger than the pixel signal SIG, the output signal is Hi.

### (During acquisition of P1 phase)

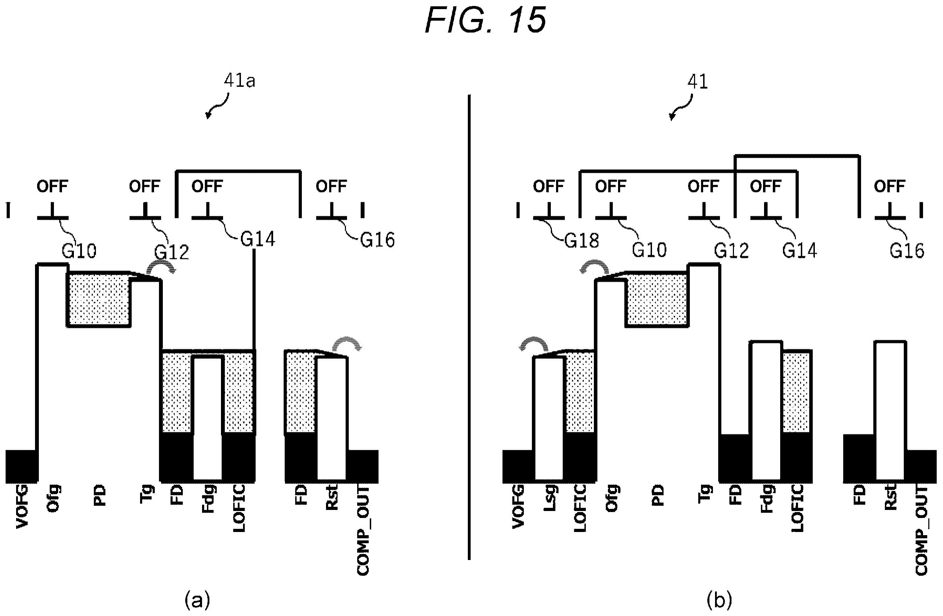

Fig. 15 is a diagram illustrating a state during acquisition of the P1 phase of the FD. As illustrated in Fig. 15(a), comparison between the reference signal REF (see Fig. 3) and the pixel signal SIG (sweep of the reference signal REF) is continued. At this point, because the reference signal REF is larger than the pixel signal SIG (see Fig. 3), the output signal is Hi. Then, when the reference signal REF becomes smaller than the pixel signal SIG, the output signal becomes Low. When the output signal is inverted, the gray code Dp1 (high gain) at the time when the output signal is inverted is latched and stored in the latch storage section 52. The data acquired here is P1-phase data of the signal level of the high-gain pixel signal.

Meanwhile, in a case where a high-luminance subject is imaged, the electric charge overflowing from the photodiode 321 accumulates in the FD 323. Moreover, when the FD 323 is saturated during the acquisition of the P1 phase, the potential barrier of the reset transistor 326 is exceeded, and the charge finally overflows the output terminal of the comparison circuit 61.

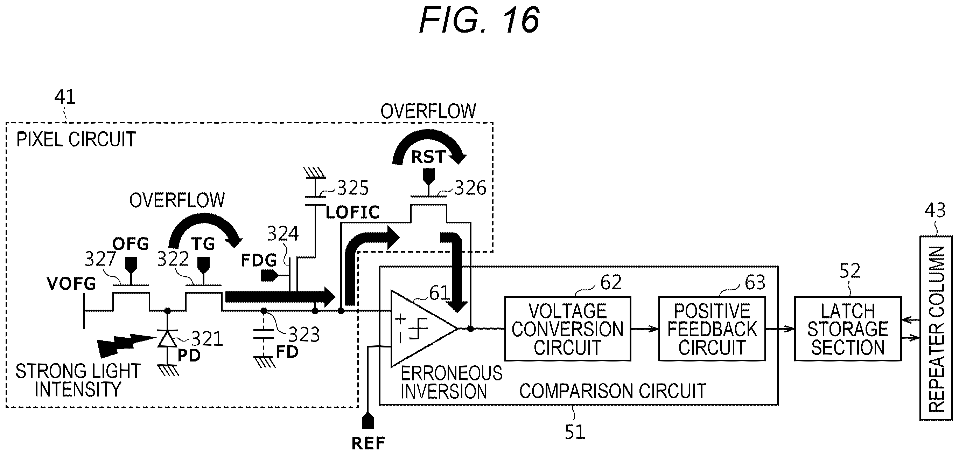

Fig. 16 is a diagram schematically illustrating a state of a circuit diagram of a pixel circuit 41a according to a comparative example corresponding to Fig. 15(a). As illustrated in Fig. 16, in the pixel circuit 41a, the charges overflowing from the FD 323 and the LOFIC 325 exceed the potential barrier of the set transistor 326, and the charges flow to the output terminal side of the comparison circuit 61. Therefore, the output signal of the comparison circuit 61 may be erroneously inverted.

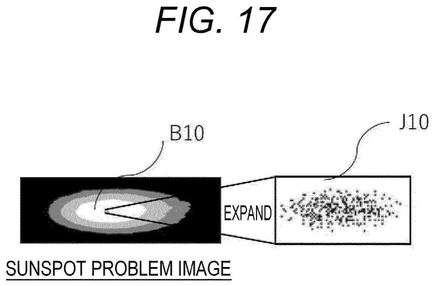

Fig. 17 is a diagram illustrating an example in which an output signal of the comparison circuit 61 is erroneously inverted by high-luminance imaging. B10 indicates a high luminance region of the sun in the captured image, and J10 indicates an enlarged view of a partial region of the high luminance region. When a state as illustrated in Fig. 13 occurs, pixels that should originally have high luminance indicated by white are erroneously inverted to black.

On the other hand, as illustrated in Fig. 15(b), in the pixel circuit 41 according to the present embodiment, comparison between the reference signal REF (see Fig. 3) and the pixel signal SIG (sweep of the reference signal REF) is continued. At this point, because the reference signal REF is larger than the pixel signal SIG, the output signal is Hi. Then, when the reference signal REF becomes smaller than the pixel signal SIG, the output signal becomes Low. When the output signal is inverted, the gray code Dp1 (high gain) at the time when the output signal is inverted is latched and stored in the latch storage section 52 (see Fig. 3). The data acquired here is P1-phase data of the signal level of the high-gain pixel signal.

Meanwhile, in a case where a high-luminance subject is imaged, electric charge is accumulated in the photodiode 321. In this case, in the pixel circuit 41 according to the present embodiment, as illustrated in Fig. 4, one end of the LOFIC 325 is connected to the node n4, unlike the comparative example. The LOFIC 325 is connected to the terminal t41 via the discharge transistor 328. At this time, as illustrated in Fig. 15(b), since the potential barrier is formed such that the first transfer transistor 322 is higher than the third transfer transistor 327, the charge overflowing from the photodiode 321 flows to the LOFIC 325 side. Moreover, the potential barrier of the discharge transistor 328 is configured to be lower than the potential barrier of the third transfer transistor 327. Therefore, when the LOFIC 325 is saturated, the charge is discharged to the terminal t41.

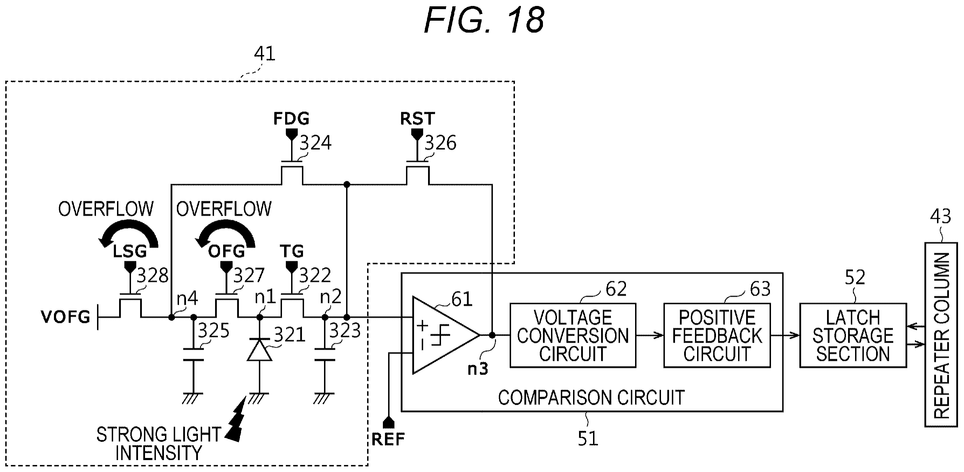

Fig. 18 is a diagram schematically illustrating a state of a circuit diagram of the pixel circuit 41 according to the present embodiment corresponding to Fig. 15(b). As illustrated in Fig. 18, the electric charge overflowing from the photodiode 321 flows to the LOFIC 325 side. Moreover, when the LOFIC 325 is saturated, the charge is discharged to the terminal t41. As described above, in the pixel circuit 41 according to the present embodiment, the charges do not overflow the FD 323 even during the imaging of the high luminance region, and the P1 phase can be acquired with higher accuracy.

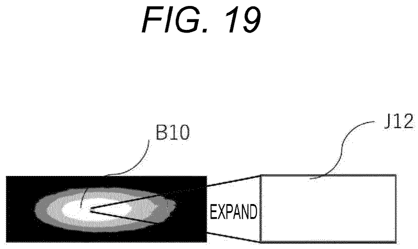

Fig. 19 is a diagram illustrating a captured image of the pixel circuit 41 according to the present embodiment in high-luminance imaging. B10 indicates a high luminance region of the sun similarly to Fig. 17, and J12 indicates an enlarged view of a partial region of the high luminance region. As illustrated in Fig. 19, the high luminance is indicated by white without being erroneously inverted to black. As described above, in the pixel circuit 41 according to the present embodiment, when the LOFIC 325 is saturated even during the acquisition of the P1 phase, the charge is discharged to the terminal t41, so that the erroneous inversion phenomenon of the comparison circuit 61 is eliminated.

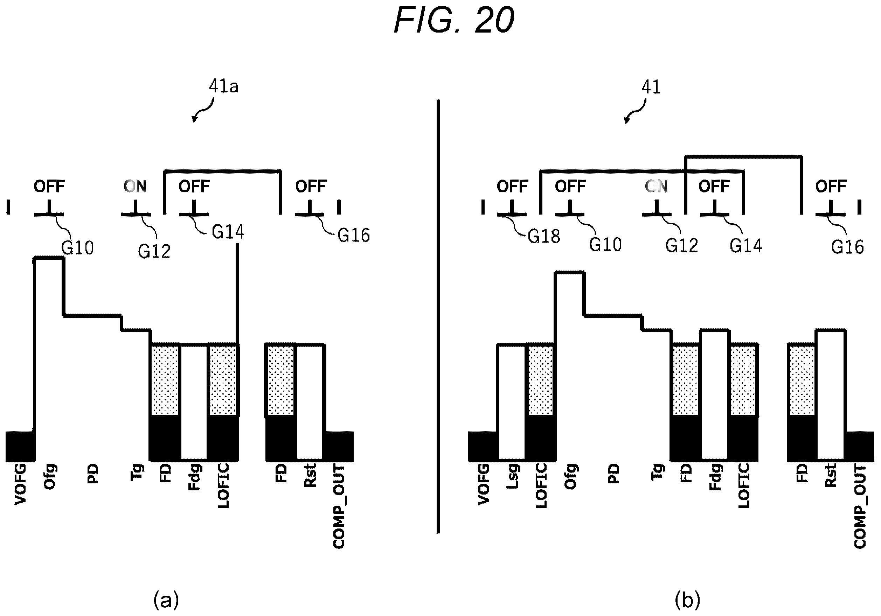

Here, an operation example of acquiring the D1 phase (high gain) and the D2 phase (low gain) will be described with reference to Figs. 20 to 22.

### (Transfer of data in PD)

Fig. 20 is a diagram illustrating a charge transfer state in the photodiode 321. As illustrated in Fig. 20, in both the pixel circuit 41a according to the comparative example and the pixel circuit 41 according to the present embodiment, the gate G12 changes from OFF to ON. Therefore, the first transfer transistor 322 becomes conductive, and the charge in the photodiode 321 is transferred to the FD 323.

### (During acquisition of D1 phase)

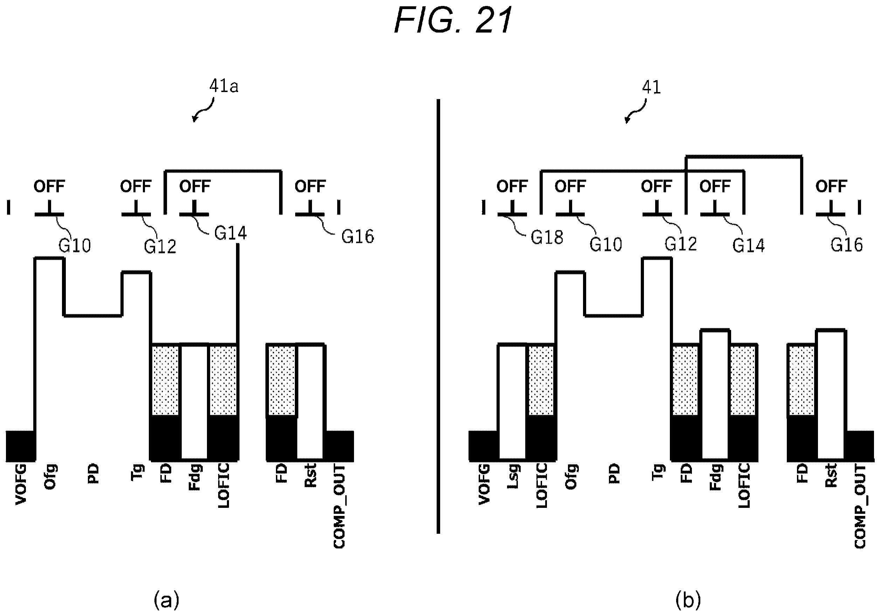

Fig. 21 is a diagram illustrating a state during acquisition of the high-gain D1 phase. As illustrated in Fig. 21, in both the pixel circuit 41a according to the comparative example and the pixel circuit 41 according to the present embodiment, the gate G12 changes from ON to OFF. Therefore, the first transfer transistor 322 is brought into a non-conductive state (OFF). As illustrated in Fig. 21, in both the pixel circuit 41a according to the comparative example and the pixel circuit 41 according to the present embodiment, comparison between the reference signal REF (see Fig. 3) and the pixel signal SIG (sweep of the reference signal REF) is continued. At this point, because the reference signal REF is larger than the pixel signal SIG (see Fig. 3), the output signal is Hi. Then, when the reference signal REF becomes smaller than the pixel signal SIG, the output signal becomes Low. When the output signal is inverted, the gray code Dd1 (high gain) at the time when the output signal is inverted is latched and stored in the latch storage section 52. The data acquired here is D1-phase data of the signal level of the high-gain pixel signal. Thus, the output of the high-gain pixel signal ends.

### (During acquisition of D2 phase)

Next, both the pixel circuit 41a and the pixel circuit 41 receive light by the photodiode 321, overflow the photodiode 321, and output the charge accumulated in the LOFIC 325 as a low-gain pixel signal.

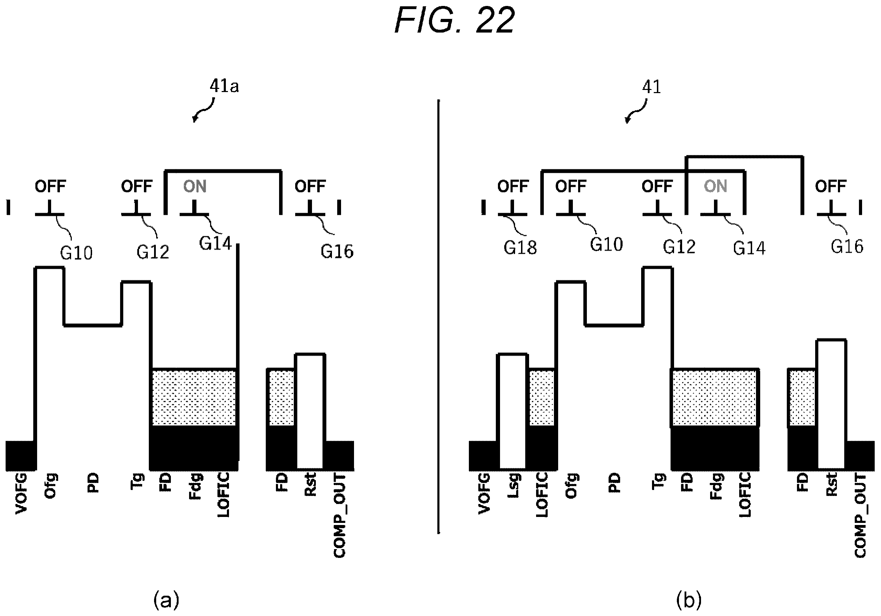

Fig. 22 is a diagram illustrating a state during acquisition of the low-gain D2 phase. As illustrated in Fig. 22, in both the pixel circuit 41a according to the comparative example and the pixel circuit 41 according to the present embodiment, the gate G14 changes from OFF to ON. Therefore, the second transfer transistor 324 is brought into a conductive state, and the FD 323 and the LOFIC 325 are brought into a parallel state. Therefore, the charges overflowed from the photodiode 321 and accumulated in the LOFIC 325 and the charges accumulated in the FD 323 are read out as the D2 phase data of the signal level of the pixel signal for low gain.

As illustrated in Fig. 22, in both the pixel circuit 41a according to the comparative example and the pixel circuit 41 according to the present embodiment, comparison between the reference signal REF (see Fig. 3) and the pixel signal SIG (sweep of the reference signal REF) is continued. At this point, because the reference signal REF is larger than the pixel signal SIG (see Fig. 3), the output signal is Hi. Then, when the reference signal REF becomes smaller than the pixel signal SIG, the output signal becomes Low. When the output signal is inverted, the gray code Dd2 (low gain) at the time when the output signal is inverted is latched and stored in the latch storage section 52. The data acquired here is D2 phase data of the signal level of the pixel signal for low gain.

### (During acquisition of P2 phase)

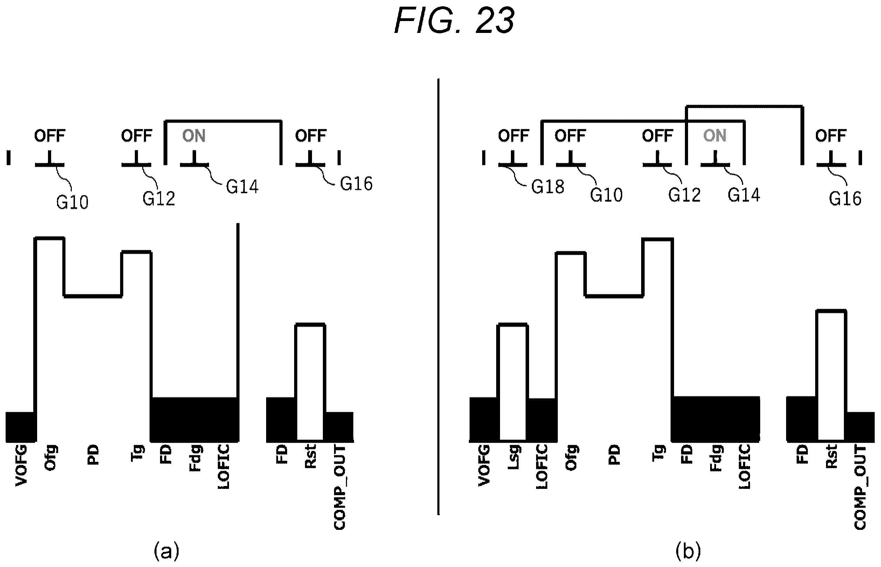

Fig. 23 is a diagram illustrating a state during acquisition of the low-gain P2 phase. After the reset operation illustrated in Fig. 7, the state illustrated in Fig. 23 is obtained. That is, after the state illustrated in Fig. 7, the gate G10 changes from ON to OFF, the gate G14 changes from OFF to ON, and the gate G16 changes from ON to OFF. Therefore, the third transfer transistor 327 is brought into a non-conductive state, the second transfer transistor 324 is brought into a conductive state, and the reset transistor 326 is brought into a non-conductive state.

As illustrated in Fig. 23, in both the pixel circuit 41a according to the comparative example and the pixel circuit 41 according to the present embodiment, comparison between the reference signal REF (see Fig. 3) and the pixel signal SIG (sweep of the reference signal REF) is continued. At this point, because the reference signal REF is larger than the pixel signal SIG (see Fig. 3), the output signal is Hi. Then, when the reference signal REF becomes smaller than the pixel signal SIG, the output signal becomes Low. When the output signal is inverted, the gray code Pd2 (low gain) at the time when the output signal is inverted is latched and stored in the latch storage section 52. The data acquired here is the P2 phase data of the signal level of the pixel signal for low gain. Thus, the output of the low-gain pixel signal ends. Then, a high-gain pixel signal is generated on the basis of the P1 phase data and the D1 phase data. Similarly, a pixel signal for low gain is generated on the basis of the P2 phase data and the D2 phase data.

As described above, according to the present embodiment, one end of the second transfer transistor 324 of the pixel circuit 41 is connected to the FD 323, the other end is connected to one end different from the photodiode 321 of the third transfer transistor 327 and one end of the LOFIC 325 via the connection point n4, and the potential barrier of the third transfer transistor 327 is configured to be lower than the potential barrier of the first transfer transistor 322. Therefore, the accumulated charges overflowing the photodiode 321 are accumulated in the LOFIC 325 beyond the potential barrier of the third transfer transistor 327, and further, the charges overflowing the LOFIC 325 can be discharged to the terminal t41. Therefore, in a case where a high-luminance subject such as the sun is imaged, the measured value is prevented from being affected by the electric charge overflowing from the LOFIC 325.

### <<Application example>>

### <<Application examples to electronic equipment>>

The technology according to the present disclosure can be applied to various products. For example, the technology according to the present disclosure may also be implemented as a device mounted on any kind of mobile body such as an automobile, an electric vehicle, a hybrid electric vehicle, a motorcycle, a bicycle, a personal mobility, an airplane, a drone, a vessel, a robot, a construction machine, an agricultural machine (tractor), or the like.

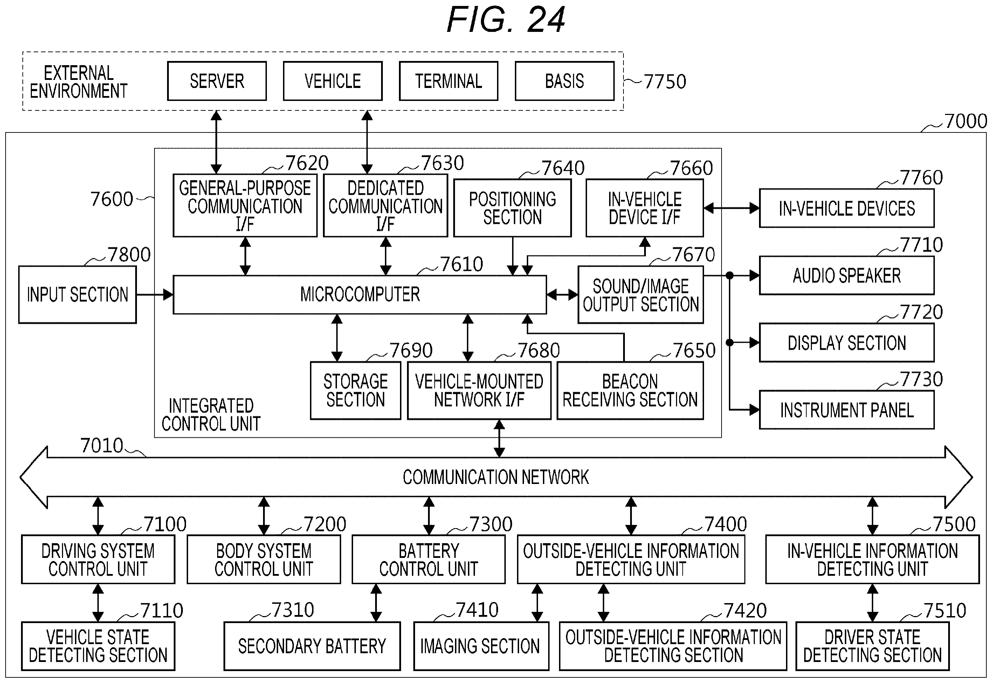

Fig. 24 is a block diagram illustrating an example of a schematic configuration of a vehicle control system 7000 as an example of a mobile body control system to which the technology according to the present disclosure can be applied. The vehicle control system 7000 includes a plurality of electronic control units connected to each other via a communication network 7010. In the example illustrated in Fig. 24, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in Fig. 24 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

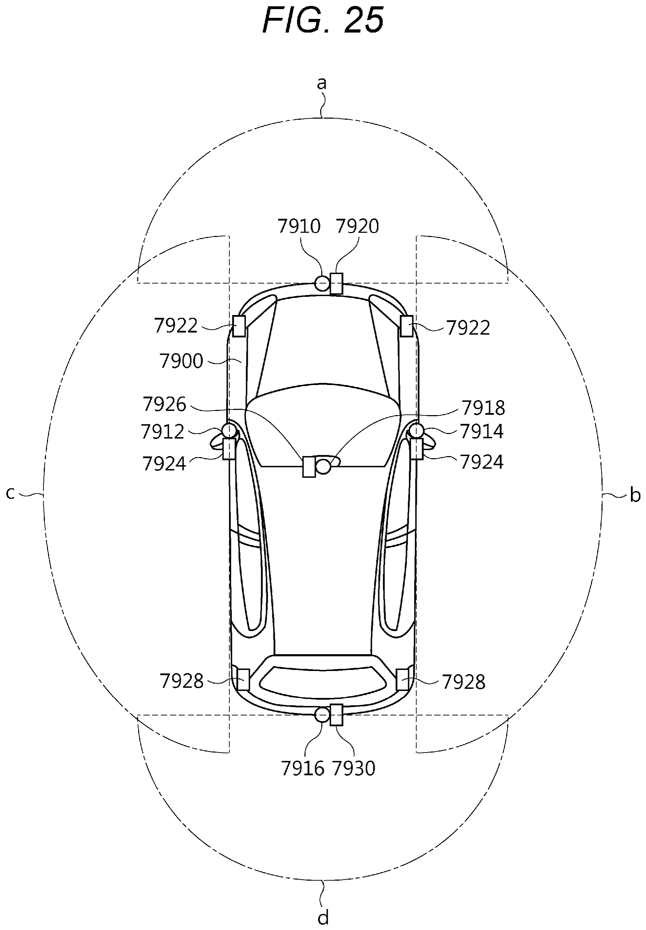

Here, Fig. 25 illustrates an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, or a back door of the vehicle 7900 or a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided on the sideview mirrors acquire mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Note that Fig. 25 illustrates an example of imaging ranges of the respective imaging sections 7910, 7912, 7914, and 7916. An imaging range a indicates the imaging range of the imaging section 7910 provided on the front nose, imaging ranges b and c indicate the imaging ranges of the imaging sections 7912 and 7914 provided on the sideview mirrors, respectively, and an imaging range d indicates the imaging range of the imaging section 7916 provided on the rear bumper or the back door. A bird's-eye image of the vehicle 7900 as viewed from above can be obtained by superimposing image data captured by the imaging sections 7910, 7912, 7914, and 7916, for example.

Outside-vehicle information detectors 7920, 7922, 7924, 7926, 7928, and 7930 provided on the front, rear, sides, and corners of the vehicle 7900 and the upper portion of the windshield within the interior of the vehicle may be, for example, an ultrasonic sensor or a radar device. The outside-vehicle information detectors 7920, 7926, and 7930 provided on the front nose, the rear bumper, and the back door of the vehicle 7900 and on the upper portion of the windshield within the interior of the vehicle may be, for example, a LIDAR device. These outside-vehicle information detecting sections 7920 to 7930 are used mainly to detect a preceding vehicle, a pedestrian, an obstacle, or the like.

Returning to Fig. 24, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of Fig. 24, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Note that at least two control units connected to each other via the communication network 7010 in the example illustrated in Fig. 24 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that a computer program for implementing each function of the photodetection element 1 according to the present embodiment described with reference to Fig. 1 can be implemented in any of the control units or the like. Furthermore, a computer-readable recording medium in which such a computer program is stored can be provided. The recording medium is, for example, a magnetic disk, an optical disc, a magneto-optical disk, a flash memory, or the like. Furthermore, the computer program described above may be distributed via, for example, a network without using a recording medium.

In the vehicle control system 7000 described above, the photodetection element 1 according to the present embodiment described with reference to Fig. 1 can be applied to the imaging section 7410 of the application example illustrated in Fig. 24. Even in the case of imaging the high luminance region, erroneous imaging can be suppressed.

Note that the present technology may have the following configurations.
(1)
   A photodetection element including a plurality of pixels, in which
   each of the pixels includes:
   a photoelectric conversion element capable of accumulating a charge according to an amount of received light;
   a first transistor including one end connected to the photoelectric conversion element and the other end connectable to a predetermined discharge potential; and
   a first storage capacitor connected to the other end.
(2)
   The photodetection element according to (1), in which the pixel
   further includes an AD converter that generates a digital signal based on a charge accumulated in the photoelectric conversion element.
(3)
   The photodetection element according to (2), in which the pixel
   further includes:
   a second transistor including one end connected to the photoelectric conversion element and the other end connectable to the AD converter; and
   a second storage capacitor connected to the other end of the second transistor.
(4)
   The photodetection element according to (3), in which the pixel
   further includes
   a third transistor including one end connected to the other end of the first transistor and the other end connected to the predetermined discharge potential.
(5)
   The photodetection element according to (4), in which the pixel
   further includes
   a fourth transistor including one end connected to the other end of the first transistor and the other end connected to the other end of the second transistor.
(6)
   The photodetection element according to (5), in which the pixel
   further includes
   a fifth transistor including one end connected to the other end of the second transistor and the other end from which a reset potential is supplied.
(7)
   The photodetection element according to (6), in which
   both the first transistor and the second transistor can be controlled to a disconnected state, and
   in the disconnected state, a potential barrier of the first transistor with respect to the charge is configured to be lower than a potential barrier of the second transistor with respect to the charge.
(8)
   The photodetection element according to (7), in which
   both the first transistor and the third transistor can be controlled to a disconnected state, and
   in the disconnected state, a potential barrier of the third transistor with respect to the charge is configured to be lower than a potential barrier of the first transistor with respect to the charge.
(9)
   The photodetection element according to (8), in which during a reset operation of the pixel, the second transistor is in a disconnected state, and the first transistor, the third transistor, the fourth transistor, and the fifth transistor are in a connected state.
(10)
   The photodetection element according to (9), in which during an exposure period of the pixel, the first transistor, the second transistor, the third transistor, the fourth transistor, and the fifth transistor are in a disconnected state.
(11)
   The photodetection element according to (10), in which at the time of acquiring high-gain first data of the pixel, the first transistor, the second transistor, the third transistor, the fourth transistor, and the fifth transistor are in a disconnected state.
(12)
   The photodetection element according to (11), in which at the time of charge transfer by the photoelectric conversion element, the second transistor is in a connected state, and the first transistor, the third transistor, the fourth transistor, and the fifth transistor are in a disconnected state.
(13)
   The photodetection element according to (12), in which at the time of acquiring high-gain second data of the pixel, the first transistor, the second transistor, the third transistor, the fourth transistor, and the fifth transistor are brought into a disconnected state after the charge transfer.
(14)
   The photodetection element according to (13), in which at the time of acquiring low-gain third data of the pixel, the fourth transistor is brought into a connected state, and the first transistor, the second transistor, the third transistor, and the fifth transistor are brought into a disconnected state after the charge transfer.
(15)
   The photodetection element according to (14), in which at the time of acquiring low-gain fourth data of the pixel, the fourth transistor is brought into a connected state, and the first transistor, the second transistor, the third transistor, and the fifth transistor are brought into a disconnected state after the reset operation.
(16)
   The photodetection element according to (15), in which a high-gain image signal is generated on the basis of the first data and the second data.
(17)
   The photodetection element according to (16), in which a low-gain image signal is generated on the basis of the third data and the fourth data.
(18)
   The photodetection element according to (17), in which the discharge potential and the reset potential are set to the same potential.
(19)
   A control method of a photodetection element including a plurality of pixels,
   each of the pixels including:
   a photoelectric conversion element capable of accumulating a charge according to an amount of received light;
   a first transistor including one end connected to the photoelectric conversion element and the other end connectable to a predetermined discharge potential; and
   a first storage capacitor connected to the other end, the control method including
   accumulating a charge overflowing the photoelectric conversion element in the first storage capacitor via the first transistor, and discharging a charge further overflowing the first storage capacitor to the discharge potential.
(20)
   Electronic equipment including a photodetection element including a plurality of pixels, in which
   each of the pixels includes:
   a photoelectric conversion element capable of accumulating a charge according to an amount of received light;
   a first transistor including one end connected to the photoelectric conversion element and the other end connectable to a predetermined discharge potential; and
   a first storage capacitor connected to the other end.

Aspects of the present disclosure are not limited to the above-described individual embodiments, but include various modifications that can be conceived by those skilled in the art, and the effects of the present disclosure are not limited to the above-described contents. That is, various additions, modifications, and partial deletions are possible without departing from the conceptual idea and spirit of the present disclosure derived from the matters defined in the claims and equivalents thereof.

### REFERENCE SIGNS LIST

- 1: Photodetection element
- 21: Pixel
- 42: ADC
- 321: Photodiode (photoelectric conversion element)
- 322: First transfer transistor (second transistor)
- 323: FD (second storage capacitor)
- 324: Second transfer transistor (fourth transistor)
- 325: LOFIC (first storage capacitor)
- 326: Reset transistor (fifth transistor)
- 327: Third transfer transistor (first transistor)
- 328: Discharge transistor (third transistor)
- t41: Terminal
- VOFG: Potential (discharge potential)

## Claims

1. A photodetection element comprising a plurality of pixels, wherein
each of the pixels includes:
a photoelectric conversion element capable of accumulating a charge according to an amount of received light;
a first transistor including one end connected to the photoelectric conversion element and another end connectable to a predetermined discharge potential; and
a first storage capacitor connected to the another end.

2. The photodetection element according to claim 1, wherein the pixel
further includes an AD converter that generates a digital signal based on a charge accumulated in the photoelectric conversion element.

3. The photodetection element according to claim 2, wherein the pixel
further includes:
a second transistor including one end connected to the photoelectric conversion element and another end connectable to the AD converter; and
a second storage capacitor connected to the another end of the second transistor.

4. The photodetection element according to claim 3, wherein the pixel
further includes
a third transistor including one end connected to the another end of the first transistor and another end connected to the discharge potential.

5. The photodetection element according to claim 4, wherein the pixel
further includes
a fourth transistor including one end connected to the another end of the first transistor and another end connected to the another end of the second transistor.

6. The photodetection element according to claim 5, wherein the pixel
further includes
a fifth transistor including one end connected to the another end of the second transistor and another end from which a reset potential is supplied.

7. The photodetection element according to claim 6, wherein both the first transistor and the second transistor can be controlled to a disconnected state, and
in the disconnected state, a potential barrier of the first transistor with respect to the charge is configured to be lower than a potential barrier of the second transistor with respect to the charge.

8. The photodetection element according to claim 7, wherein both the first transistor and the third transistor can be controlled to a disconnected state, and
in the disconnected state, a potential barrier of the third transistor with respect to the charge is configured to be lower than a potential barrier of the first transistor with respect to the charge.

9. The photodetection element according to claim 8, wherein during a reset operation of the pixel, the second transistor is in a disconnected state, and the first transistor, the third transistor, the fourth transistor, and the fifth transistor are in a connected state.

10. The photodetection element according to claim 9, wherein during an exposure period of the pixel, the first transistor, the second transistor, the third transistor, the fourth transistor, and the fifth transistor are in a disconnected state.

11. The photodetection element according to claim 10, wherein at a time of acquiring high-gain first data of the pixel, the first transistor, the second transistor, the third transistor, the fourth transistor, and the fifth transistor are in a disconnected state.

12. The photodetection element according to claim 11, wherein at a time of charge transfer by the photoelectric conversion element, the second transistor is in a connected state, and the first transistor, the third transistor, the fourth transistor, and the fifth transistor are in a disconnected state.

13. The photodetection element according to claim 12, wherein at a time of acquiring high-gain second data of the pixel, the first transistor, the second transistor, the third transistor, the fourth transistor, and the fifth transistor are brought into a disconnected state after the charge transfer.

14. The photodetection element according to claim 13, wherein at a time of acquiring low-gain third data of the pixel, the fourth transistor is brought into a connected state, and the first transistor, the second transistor, the third transistor, and the fifth transistor are brought into a disconnected state after the charge transfer.

15. The photodetection element according to claim 14, wherein at a time of acquiring low-gain fourth data of the pixel, the fourth transistor is brought into a connected state, and the first transistor, the second transistor, the third transistor, and the fifth transistor are brought into a disconnected state after the reset operation.

16. The photodetection element according to claim 15, wherein a high-gain image signal is generated on a basis of the first data and the second data.

17. The photodetection element according to claim 16, wherein a low-gain image signal is generated on a basis of the third data and the fourth data.

18. The photodetection element according to claim 17, wherein the discharge potential and the reset potential are set to a same potential.

19. A control method of a photodetection element including a plurality of pixels,
each of the pixels including:
a photoelectric conversion element capable of accumulating a charge according to an amount of received light;
a first transistor including one end connected to the photoelectric conversion element and another end connectable to the discharge potential; and
a first storage capacitor connected to the another end,
the control method comprising
accumulating a charge overflowing the photoelectric conversion element in the first storage capacitor via the first transistor, and discharging a charge further overflowing the first storage capacitor to the discharge potential.

20. Electronic equipment comprising a photodetection element including a plurality of pixels, wherein
each of the pixels includes:
a photoelectric conversion element capable of accumulating a charge according to an amount of received light;
a first transistor including one end connected to the photoelectric conversion element and another end connectable to a predetermined discharge potential; and
a first storage capacitor connected to the another end.
